(19)

Europäisches
Patentamt
European
Patent Office
Office européen
des brevets

(11) **EP 4 787 233 A1**

(12) **EUROPEAN PATENT APPLICATION**

(43) Date of publication:
**05.08.2026 Bulletin 2026/32**

(21) Application number: **26156001.5**

(22) Date of filing: **03.02.2026**

(51) International Patent Classification (IPC):
**G06N 3/045** (2023.01)   **G06N 3/0475** (2023.01)
**G06N 3/084** (2023.01)   **G06N 3/092** (2023.01)

(52) Cooperative Patent Classification (CPC):
**G06N 3/084; G06N 3/045; G06N 3/0475;
G06N 3/092**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.02.2025 IN 202511008867**

(71) Applicant: GDM Holding LLC
**Mountain View, CA 94043 (US)**

(72) Inventors:
• **Srivastava, Pragya**
**London, N1C 4AG (GB)**
• **Madhavan, Rahul**
**London, N1C 4AG (GB)**
• **Shanmugam, Karthikeyan**
**London, N1C 4AG (GB)**
• **Raghuveer, Aravindan**
**London, N1C 4AG (GB)**

(74) Representative: **Marks & Clerk GST
1 New York Street
Manchester M1 4HD (GB)**

(54) **TRAINING GENERATIVE NEURAL NETWORK SYSTEMS USING MULTIPLE REWARD MODELS**

(57)    Methods, systems, and computer storage media are provided for training generative neural network systems, such as Large Language Models (LLMs) or Vision-Language Models (VLMs), using multiple reward models. The process involves generating one or more output sequences from a training input sequence and processing these examples using a plurality of different reward models to generate respective reward values. These reward values are combined to obtain an aggregated reward, which may be calculated as a product of the values, a weighted geometric mean, or a Nash score. The generative neural network is trained using an objective function determined using the aggregated reward, such as a cross-entropy loss or a contrastive objective function, often utilizing log score differences between the system and a reference model. These techniques allow for multi-objective alignment and are adapted for implementation on parallel processing computer systems.

Figure 1

EP 4 787 233 A1

**Description**

BACKGROUND

This specification relates to generating data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

SUMMARY

This specification describes systems and methods implemented as computer programs on one or more computers in one or more locations that can train a generative neural network system using multiple reward models, in particular to adapt a data generation policy of the system to the reward models. The described techniques can also be used to grade multiple output sequence samples generated from a particular input sequence. Some implementations of the techniques are adapted to implementation on a parallel processing computer system. The specification also describes use of the trained generative neural networks.

According to a first aspect there is provided a computer-implemented method of training, e.g. fine-tuning, a generative neural network system.

The generative neural network system is configured to generate an output sequence by processing an input sequence using a sequence processing neural network.

The generative neural network system can comprise a large language model (LLM) or a vision-language model (VLM) that generates the output sequence in response to an input sequence that defines a "prompt" for the system.

Implementations of the system use multiple (trained) reward models. In general a reward model defines a reward value (e.g. a scalar number) for a combination of an input sequence and a corresponding output sequence, e.g. that has been generated by the generative neural network system based on the input sequence. That is a reward model can process a combination of an input sequence and an output sequence to generate the reward value.

In implementations the reward model comprises a reward model neural network configured to process the input sequence and the corresponding output sequence to generate the reward value. The training input sequence and each of the one or more corresponding training output sequences can be processed using each of the different reward models to generate the respective plurality of reward values, i.e. each reward value being obtained by processing the input and one of the corresponding output sequences of a training example.

The reward model neural network can have any suitable architecture and can include, e.g., one or more feed forward neural network layers, one or more recurrent neural network layers, one or more convolutional neural network layers, one or more attention neural network layers, or one or more normalization layers. As an example, the reward model neural network may comprise a transformer neural network, i.e. a neural network comprising a stack of transformer blocks.

A transformer block typically includes an attention or self-attention neural network layer, which may be followed by a feedforward neural network layer. In general a self-attention neural network layer applies a self-attention operation, e.g. a query-key-value (QKV) self-attention operation, to elements of an embedding, to update each element of the embedding.

In some implementations, as described further later, one or more of the reward models is based on a trained, e.g. fine-tuned, LLM or VLM, e.g. with a linear layer arranged to process an output of a final Transformer layer of the LLM or VLM, e.g. an output token embedding, to generate the reward value. In some implementations, as described further later, the reward models comprise (earlier) instances of the generative neural network system. A single reward value for a sequence can be obtained, e.g. from the output corresponding to a final token of the sequence, or by aggregating output token embeddings for the sequence prior to processing with the linear layer. In some implementations the reward value can be linearly mapped to the range [0,1].

The reward models can be obtained conventionally, in any convenient manner. For example a reward model can be obtained by training the model, e.g. a reward model neural network, using RLHF (Reinforcement Learning from Human Feedback), using human preferences obtained from human-labelled data. This can use any suitable objective, e.g. a maximum likelihood estimation (MLE) loss. Also or instead of using human-labelled data a reward model can be obtained using AI-feedback, e.g. from another LLM or VLM.

Implementations of the described techniques obtain a set of training examples. Each training example comprises a training input sequence and a set of one or more corresponding training output sequences. A training example can be obtained by processing each training input sequence using the generative neural network system to generate each of the one or more corresponding training output sequences. The generative neural network system can be an earlier instance/version of the generative neural network system, i.e. one prior to the implementation of the described training (fine-tuning) method, that may be referred to as a baseline model.

The method described below is performed for each training example; in implementations the training examples are grouped into batches for training the system.

The method involves processing a training example using a plurality of different reward models to generate a respective plurality of reward values. In general each of the different reward models has a different objective, i.e. a different system policy that it encourages when generating the output sequence, to favor different characteristics of the generated sequence. That is, the reward values generated by the different reward models can measure compliance with different output sequence generation policies.

As an example, when the output sequence defines text, a still or moving image, or audio, one reward model could encourage the accuracy with which the generated sequence follows instructions in the input sequence i.e. prompt, and another reward model could encourage the generation of safe content, e.g. contact that is not harmful or offensive. As another example, when the output sequence defines actions for controlling an agent to perform a task, e.g. a mechanical agent in a real-world environment, reward models could: encourage the accuracy with which the generated sequence follows instructions in the input sequence i.e. prompt; or encourage the generation of safe actions; or define a preferred trajectory of motion of the mechanical agent in the environment; or define a manner of performing the task, e.g. to reward a reduction in energy used; and so on.

The method combines the reward values from each of the reward models to obtain an aggregated reward. In some implementations, this can be done by determining a product of the reward values. In implementations, a value of the aggregated reward is dominated by the lowest reward value. In general, the aggregated reward promotes training output sequences that are approved by all the reward models above training output sequences that are relatively disapproved (or rejected) by one or more of the reward models, where "promotion" refers to giving a relatively higher aggregated reward. In some implementations, a value of the aggregated reward can be determined by determining whether or not one or more of the reward models rejects the output sequence according to a rejection criterion (e.g. the reward value is below a threshold) and then allocating a relatively lower value when this is true compared to when this is not true. For example, the aggregate reward can have a value that progressively reduces with a number of reward models that reject an output sequence.

The sequence processing neural network of the generative neural network system is trained using the aggregated reward, i.e. using an objective function determined using (i.e., dependent on) the aggregated reward.

In general training the sequence processing neural network comprises backpropagating gradients of the objective function (with respect to the learnable parameters) to update the learnable parameters, e.g. weights, of the sequence processing neural network. This can use any appropriate gradient descent optimization algorithm, e.g. Adam or another optimization algorithm. Typically, the gradients of the objective function are determined for a batch of training examples, and accumulated or averaged over the batch before performing an update step to update the learnable parameters.

In some implementations determining the product of the reward values comprises determining a weighted geometric mean of the reward values, in particular a weighted geometric mean of the reward values. The weights define the relative weights given to the respective reward models in determining the output sequence, i.e. in the output sequence generation policy of the generative neural network system.

In some implementations the aggregated reward comprises a Nash score or a weighted Nash score of the reward values. In general, the Nash score or weighted Nash score allocates an aggregated reward that is dominated by the lowest one of the reward values. Broadly, because the Nash product is dominated by any reward value that is close to zero, a response that fails a single reward model effectively has a low Nash or weighted Nash value. As an illustrative example, an output sequence that is given a high reward by all the reward models, e.g. one that is greater than a threshold reward value, can be labelled as accepted and otherwise labelled as rejected, i.e. when the output sequence fails according to at least one reward model.

Some implementations of the method involve determining a log score difference for each of the training examples, and for each of the one or more corresponding training output sequences to the training input sequence of the training example.

In general the log score difference is dependent on a relative log likelihood of the training output sequence in the training example given the training input sequence in the training example, under i) the output sequence generation policy of the generative neural network system, i.e. a likelihood of the training output sequence being generated by the generative neural network system; and ii) a reference output sequence generation policy, i.e. a likelihood of the training output sequence being generated by a reference generative neural network system.

The log score difference for a training output sequence can be determined from a sum over each element (w), i.e. token, of the training output sequence given the training input sequence and the preceding elements, if any, of the training output sequence. The log likelihood of each token is determined for the generative neural network system and for the reference generative neural network system, e.g. from a log of the probability of the token given by the respective system. The log score difference for a token can be determined by the difference in these log likelihoods, and this can be summed over the elements (tokens) of the output sequence to obtain the log score difference for the output sequence.

The relative probability of an output token is typically defined by the system output, e.g. as a set of logits over a vocabulary of possible output tokens; and the probability of the output token can be defined by a softmax over these.

In general, the generative neural network system is the current generative neural network system, i.e. the generative neural network system currently being trained.

The reference generative neural network system can be any generative neural network system capable of processing the training input sequence to generate a corresponding training output sequence. Typically reference generative neural network system is a reference version of the generative neural network system, e.g. a previous iteration of the generative neural network system or the outcome of a pre-training or supervised fine-tuning training phase of the generative neural network system.

In implementations the objective function is dependent on a combination of the log score difference and the aggregated reward for a training example. For example, as described later, where a cross-entropy type objective function is used, the objective function can be dependent on a product of a normalized version the log score difference and the aggregated reward for a training example, and where a contrastive objective function is used the objective function can be dependent on a sum, e.g. a weighted sum, of the log score difference and the aggregated reward for a training example.

In more detail, in some implementations the objective function comprises a cross-entropy loss between a distribution of the log score differences and a target distribution defined by the aggregate reward.

The cross-entropy loss for a training example can be determined as a product of a first cross-entropy term dependent upon the aggregated reward and a second cross-entropy term that represents, i.e. is dependent upon, the log score difference.

Implementations of the described techniques enable the use of multiple responses, i.e. they can take advantage of the generation of multiple training output sequences corresponding to a training input sequence. For example, there can be multiple different ways to get an output sequence "wrong"; and there can be a few different ways of getting an output sequence "right". This can be appreciated by considering an input sequence that defines a query and a corresponding output sequence that defines a response to the query.

Thus some implementations of the described techniques involve generating multiple corresponding training output sequences corresponding to the training input sequence. This can be done by processing the training input sequence using the generative neural network system multiple times to obtain multiple samples from the generative neural network system, each sample providing a respective one of the corresponding training output sequences.

The ability of the described techniques to train using multiple responses also enables the training to be adapted to parallel processing hardware. Specifically this can involve processing each training input sequence using multiple instances of the generative neural network system operating in parallel to obtain multiple samples from the generative neural network system to provide the multiple corresponding training output sequences corresponding to the training input sequence.

Where a cross-entropy loss is used with multiple training output sequences corresponding to the same training input sequence, The cross-entropy loss for a training example can be determined as a sum, over each of the training output sequences in the training example, of a product of the first cross-entropy term and the second cross-entropy term for the respective training output sequence.

The first cross-entropy term for a training output sequence can be determined by converting the aggregated reward for the respective training output sequence in the training example into a respective logit. The logits can be normalized to form a target distribution.

The second cross-entropy term for a training output sequence can be determined as a respective softmax of the log score difference over the log score differences for the training output sequence in the training example. There is no need for a softmax where there is only one response (training output sequence).

The cross-entropy loss for a training example can be determined by, for each of the corresponding training output sequences in the training example, determining the product of the first cross-entropy term and the second cross-entropy term, and summing the determined products.

In some implementations, the objective function comprises a contrastive objective function Then, the multiple corresponding training output sequences in a training example can be divided into two (disjoint) groups, a positive group and a negative group, based on their (respective) aggregated rewards, each group comprising one or more corresponding training output sequences. This can be done using the aggregated reward so that one or more aggregated rewards of the corresponding training output sequences are (on average) larger in the positive group than in the negative group. For example this can be done by comparing the aggregated reward with a threshold, e.g. a mean aggregated reward for the training output sequences in the training example. There can be just one training output sequences in each group.

The sequence processing neural network of the generative neural network system can then be trained using the contrastive objective function, where the contrastive objective function is dependent on the one or more aggregated rewards in each of the two groups.

The contrastive objective function can be determined from a ratio of a first contrastive term dependent on the one or more aggregated rewards in the positive group and a second contrastive term dependent on the one or more aggregated rewards in the negative group, more specifically on complements of the aggregated rewards in the negative group. Here the complement of an aggregated reward can be a constant less the aggregated reward, so that the aggregated reward and its complement sum to a constant, e.g. 1 where a reward value is in [0,1]. The first contrastive term (A) can be interpreted as a term dependent on the "accepts"; the second contrastive term

(A+B) can be interpreted as an "accepts + rejects" term, i.e. it can include the first contrastive term. The contrastive objective function can be determined as a log of the ratio.

In some implementations the first contrastive term can be determined from a sum of the log score difference for the training output sequence and the aggregated reward for each training output sequence in the positive group (A).

The second contrastive term can be determined from a sum of the log score difference for the training output sequence and a (weighted) value complementary to the aggregated reward, i.e. the complement of the aggregated reward as described above, for each training output sequence in the negative group (e.g. to determine B in A+B).

Where the positive group comprises a plurality of training output sequences, the first contrastive term can be determined by summing, over each training output sequence in the positive group, an exponentiated version of the sum of the log score difference for the training output sequence and the aggregated reward for the training output sequence. Where the negative group comprises a plurality of training output sequences, the first contrastive term can be determined by summing, over each training output sequence in the negative group, an exponentiated version of the sum of the log score difference for the training output sequence and the value complementary to the aggregated reward for the training output sequence.

As previously mentioned, the plurality of different reward models can comprise an instance of the sequence processing neural network of the generative neural network system, e.g. a baseline model. A separate neural network head, e.g. comprising one or more neural network layers, e.g. a linear layer, can then be used to implement each of the different reward models. When the reward models are trained the learnable parameters of the shared sequence processing neural network can be fixed and the specialized heads optimized for each reward (by training each of them on a respective reward objective, using labelled training data). That is, in some implementations the plurality of different reward models use the sequence processing neural network of the generative neural network system as a shared model for generating the reward values.

This way of implementing the reward models is also adapted to parallel processing, facilitating generating the reward values in parallel. More particularly, processing the training example using the plurality of different reward models can involve processing a training input sequence and one of the corresponding training output sequences using the instance of the sequence processing neural network to generate each of the respective plurality of reward values in parallel from a respective one of the neural network heads. For example, at least some (e.g., all) of the neural network heads can be implemented on different hardware computing devices (e.g., neural network accelerators, e.g., in a parallel computer system), such that the plurality of reward values can be generated in parallel, e.g., asynchronously.

Using the same sequence processing neural network also facilitates implementing different instances of this neural network (with different weights) that run in parallel during the training, to generate the corresponding training output sequences, and to generate the reward values for the corresponding training output sequences. For example, a pipelined approach can be adopted in which one instance of the sequence processing neural network can be used to generate an output sequence whilst another instance of the sequence processing neural network can be used to generate the reward values for a previously generated output sequence.

An example parallel processing computer system can comprise a plurality of hardware computing devices configured to operate in parallel. Each hardware computing device may comprise a neural network accelerator, i.e. specialized hardware that is used to accelerate neural network computations, such as a GPU (Graphics Processing Unit) or TPU (Tensor Processing Unit). In general, a neural network accelerator is configured to perform hardware matrix multiplications; it can include a set of one or more multiply accumulate units (MACs).

In another aspect there is described a computer-implemented method that involves using a generative neural network system has been trained as described above to process an input sequence to generate a corresponding output sequence.

According to another aspect, there is provided a system that includes one or more computers and one or more storage devices communicatively coupled to the one or more computers and storing instructions that, when executed by the one or more computers, cause the one or more computers to perform operations of the previously described method.

According to another aspect, there is provided one or more non-transitory computer storage media storing instructions that when executed by one or more computers cause the one or more computers to perform operations of the previously described method.

Particular embodiments of the subject matter described in this specification can be implemented so as to realize one or more of the following advantages.

Implementations of the described techniques can be used to adapt a generative neural network system to multiple different reward models. More particularly, the described techniques use an egalitarian approach for combining rewards from the reward models in which an aggregated reward is constructed that is low if the reward from any one reward model is low, i.e. which is dominated by the lowest reward. Larger values of the aggregated reward are only obtained when none of the reward values is low, i.e. when all the reward models are satisfied. This is useful as some other approaches could achieve a high aggregated reward even when one reward value is low provided that other reward values are high, which is undesirable. For example, with some other approaches a high aggregate reward could be generated with high reward values for following instructions and for factual correctness, even if a low reward value was given for safety. The described techniques encourage good performance across all the reward dimensions.

Implementations of the described techniques also enable multiple different model responses to be sampled for a particular input, and used for training the system. This can help to reward different styles of output, which can help with a diversity of responses. It can also help to capture different ways in which an output sequence can be "incorrect", which is useful as there are generally more ways of being incorrect than of being correct.

The described techniques make it easy to add or remove reward models, e.g. to adapt a model on the fly. Also implementations of the described techniques are sufficiently lightweight to enable a generative neural network system to be tuned in real time as required for any particular application.

Some implementations of the described techniques are adapted to implementation in a parallel computing system facilitating, e.g., faster, more efficient training and deployment.

The described techniques are based on a principled approach that has theoretical guarantees.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example training system for training a generative neural network system.
FIG. 2 shows part of an example training system that uses a reference generative neural network when training a generative neural network system.
FIG. 3 is a flow diagram of an example process for training a generative neural network system.
FIG. 4 is a flow diagram of an example process for determining an objective function for use in the process of FIG. 3.
FIG. 5 is a flow diagram of another example process for determining an objective function for use in the process of FIG. 3.
FIG. 6 is a table comparing benchmark results obtained using generative neural network systems trained as described in this specification and with systems trained using existing techniques.

Like reference numbers and designations in the various drawings indicate like elements.

DETAILED DESCRIPTION

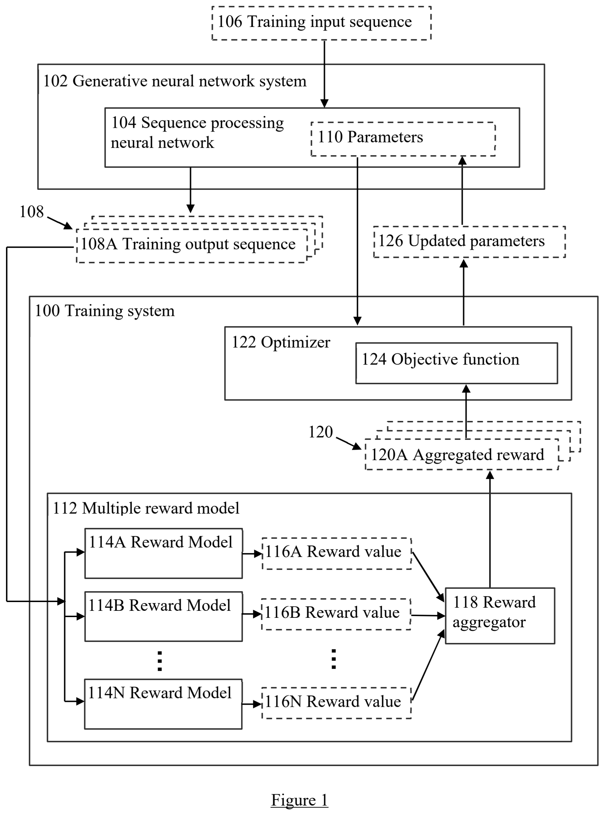

FIG. 1 shows an example training system 100 for training a generative neural network system 102. The training system 100 and the generative neural network system 102 are examples of systems that are each implemented as computer programs on one or more computers in one or more locations, in which the systems, components, and techniques described below can be implemented.

The generative neural network system 102 is configured to generate an output sequence by processing an input sequence using a sequence processing neural network 104. During training of the generative neural network system 102, the training system 100 uses the generative neural network system 102 to generate a set of training examples. Each training example comprises a training input sequence 106 and a set of one or more corresponding training output sequences 108 generated by processing the training input sequence 106 using the generative neural network system 102. Each of the training output sequences 108 is generated in accordance with learnable parameters 110 of the sequence processing neural network 104, such as weights and/or biases of the neural network.

In some implementations the input sequence and the output sequence, the training input sequence 106 and the one or more corresponding training output sequences 108, each comprise a sequence of tokens. A "token" as used in this specification is a vector of numerical values having a specified dimensionality, i.e. the number of numerical values is constant across different tokens. Each token can comprise a respective predetermined or learned embedding (an ordered collection of numerical values having a pre-determined dimensionality.

In general, the generative neural network system 102, in particular the sequence processing neural network 104, can have any appropriate architecture for generating an output sequence by processing an input sequence.

As one example, the generative neural network system 102, in particular the sequence processing neural network 104, may comprise an auto-regressive generative model (e.g., a Transformer, a recurrent neural network, etc.) that can auto-regressively generate the output sequence based on the input sequence. The generative neural network system 102 can, for example, comprise a large language model (LLM) that can generate tokenized representations of text data; a vision-language model (VLM) that can generate tokenized representations of image or video data, e.g., in response to a text input or that can generate tokenized representations of text, e.g., in response to an image input; an audio model that can input or generate tokenized representations of audio data; or a multimodal model that can generate tokens representing any of text, image or audio, e.g., in response to an input comprising any of text, image or audio; and so on. When the generative neural network system is a multimodal system, audio data or an image may be flagged by a start-of-audio token or start-of-image token.

The training system 100 can be implemented as a parallel computer system in some implementations. For example, multiple instances of the generative neural network system 102 can be provided, e.g., multiple instances operating on different hardware computing devices, such that multiple training input sequences 106 can be processed in parallel (e.g., asynchronously) by the generative neural network system to generate two or more of the corresponding training output sequences 108A.

The training system 100 comprises a multiple reward model 112 that comprises a plurality of different reward models 114A-N that are each configured to generate a respective reward value 116A-N by processing a training output sequence 108A. The multiple reward model 112 also comprises a reward aggregator 118 configured to generate an aggregated reward 120A for the training output sequence 108A by combining the reward values 116A-N generated by the reward models 114A-N. The training system 100 uses the multiple reward model 112 to generate respective aggregated rewards 120 for the training output sequences 108 in the set of output training sequences 108 for the training example. In some implementations where the training system 100 is implemented as a parallel computer system, the multiple reward model 112 can be implemented on multiple hardware computer devices. For example, some or all of the reward models 114A-N can be implemented on different hardware computing devices (e.g., neural network accelerators), such that the respective reward values 116A-N can be generated in parallel, e.g., asynchronously. In some implementations, the plurality of different reward models comprises an instance of the sequence processing neural network of the generative neural network system with a separate neural network head for each of the different reward models. Each instance can, for example, be implemented on different hardware computer devices to allow the training output sequences and corresponding reward values to be determined in parallel, e.g., asynchronously.

The reward aggregator 118 can determine a product, e.g., a weighted geometric mean, of the reward values 116A-N from each of the reward models 114A-N to obtain the aggregated reward 120A.

As one example, the aggregated reward can comprise a Nash score (e.g., geometric mean) or a weighted Nash score of the reward values. A weighted Nash (WN) score can be determined using:

$$\text{WN}(a) = \prod_{i=1}^{M} \left(r_i(a)\right)^{w_i}$$

In this expression, $a$ denotes a training output sequence 108A, $M$ denotes the number of reward models 114A-N, $r_i(a) \in [0,1]$ denotes the reward value 116A-N generated by $i$-th reward model, and $w_i$ denotes a weight associated with the i-th reward model. The weights can be normalized such that they sum to one, for example. The weighted Nash score therefore favors training output sequences 108A for which none of the reward values 116A-N are close to zero. A weighted Nash score can be shown to preserve benefits such as Pareto efficiency, scale invariance, monotonicity, and continuity, which make it well-suited for multi-objective alignment.

The training system 100 further comprises an optimizer 122 that is configured to train the sequence processing neural network 104 of the generative neural network system 102 using an objective function 124 dependent on the aggregated reward(s) 120A for the training example. During training, the optimizer 122 generates, for each of the training examples, updated parameters 126 for the sequence processing neural network 104 that progressively optimize the objective function 124.

In general, training the sequence processing neural network 104 comprises backpropagating gradients of the objective function 124 with respect to the learnable parameters 110 of the sequence processing neural network 104 to update the learnable parameters 110, e.g. weights, of the sequence processing neural network. The optimizer 122 can use any appropriate gradient descent optimization algorithm, e.g. Adam (see e.g., Kingma et al., arXiv:1412.6980) or another optimization algorithm. Typically, the gradients of the objective function 124 are determined for a batch of training examples and accumulated or averaged over the batch before performing an update step to generate the updated parameters 126.

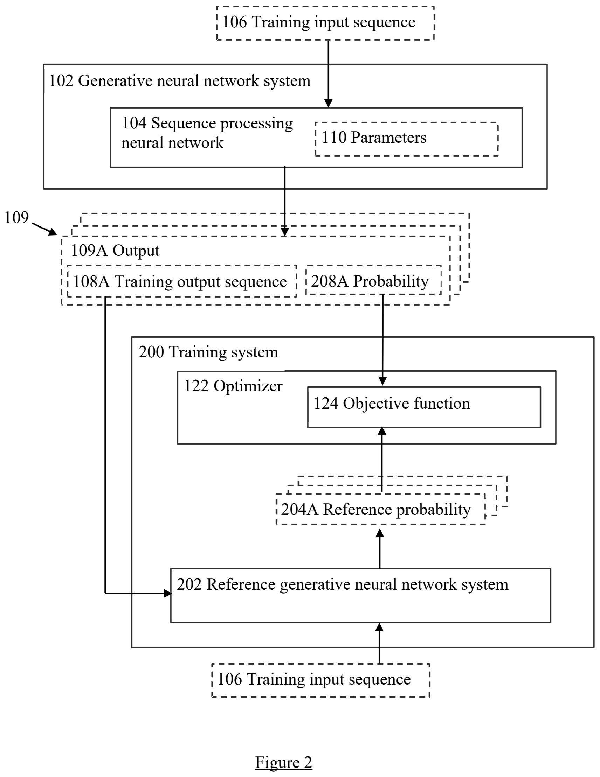

FIG. 2 shows part of an example training system 200, which is the same as the training system 100 described above in connection with FIG. 1 (parts of which are not shown in FIG. 2), except that it also comprises a reference generative neural network 202 that the training system 200 uses to generate respective reference probabilities 204A for each of the training output sequences 108A generated using the generative neural network system 102. The reference generative neural network 202 can, for example, comprise the sequence processing neural network 104 of the generative neural network system 102 with the parameters 110 frozen, i.e., to act as a baseline model against which improvements to the sequence processing neural network 104 brought about by the training can be assessed.

In this example, the training system also uses the generative neural network system 102 to generate a set of outputs 109 for each training example. Each output 109A comprises a respective one of the training output sequences 108A and a corresponding probability 208A for that training output sequence 108A. In this example, the objective function 124 is dependent on the probabilities 208A and the reference probabilities 204A, as well as the aggregated reward 120A, for each of the training output sequences 108A of each training example.

In general, the generative neural network system 102 and the reference generative neural network system 202 can each define a probability distribution over output sequences,

In general, the probability for an output sequence 108A can be determined using a probability distribution over possible output sequences defined by the (reference) generative neural network system 102, 202. For example, the (reference) generative neural network system 102, 202 can define an auto-regressive probability distribution over possible output sequences determined from respective probabilities for successive tokens in the output sequence given the preceding tokens in the output sequence 108A and the input sequence 106. For example, the probability of each output token can be defined by a softmax over a corresponding set of logits over a vocabulary of possible output tokens.

As one example, the objective function 124 can comprise a contrastive objective function. The training system 200 is then configured to divide the training output sequences 108A in a training example into two (disjoint) groups, a positive group and a negative group, based on their (respective) aggregated rewards 120A. For example, the aggregated reward 120A of each training output sequence 108A can be compared with a threshold, e.g. a mean aggregated reward 120A for the training output sequences 108A in the training example, and the training output sequence 108A assigned to the positive group if the threshold is exceeded, or to the negative group otherwise.

The contrastive objective function can be determined from a ratio of a first contrastive term dependent on the one or more aggregated rewards in the positive group and a second contrastive term dependent on the one or more aggregated rewards in the negative group.

For example, the first and second contrastive terms can be calculated using two intermediate values denoted by $A_k$ and $B_k$ for the k-th training example in the set of training examples, and themselves calculated according to:

$$A_k = \sum_{i \in S_k^+} \exp\{ l_{k,i} + \alpha \mathrm{WN}(a_{k,i}) \},$$

$$B_k = \sum_{i \in S_k^-} \exp\{ l_{k,i} + \alpha \overline{\mathrm{WN}}(a_{k,i}) \}$$

In this expression, $S_k^+$ and $S_k^-$ are the positive and negative groups, respectively, $i$ indexes the training output sequences 108A in each group, $l_{k,i}$ is a log-score difference for the $i$-th training output sequence 108A of the $k$-th training example, WN($a_{k,i}$) is the weighted Nash score for the i-th training output sequence 108A of the k-th training example, $\overline{\mathrm{WN}}$ ($a_{k,i}$) = 1 - WN($a_{k,i}$) is the complement of WN($a_{k,i}$), and $\alpha$ is a hyperparameter scaling how strongly the weighted Nash scores affect the exponentiation.

The log-score difference can be calculated according to:

$$l_{k,i} = \sum_{w \in y_{k,i}} [\log P_\theta(w \mid x_k) - \log P_{\mathrm{ref}}(w \mid x_k)]$$

In this expression, $y_{k,i}$ is the $i$-th training output sequence 108A of the $k$-th training example, $x_k$ is the training input sequence 106 of the $k$-th training example, $P_\theta(w \mid x_k)$ is the probability (likelihood) 208A defined by the generative neural network system 102 for that training output sequence 108A in accordance with the current parameters $\theta$ 110 of the sequence processing neural network 104 given that training input sequence 106, and $P_{\mathrm{ref}}(w \mid x_k)$ is the reference probability (likelihood) 204A defined by the reference generative neural network system 202 for that training output sequence 108A.

As one example, the contrastive objective function can be determined for the k-th training example as follows, in which $\gamma > 0$ controls how strongly training output sequences 108A in the negative group are penalized:

$$L_k^{\mathrm{GCL}}(\theta) = -\log\left(\frac{A_k}{A_k + \gamma B_k}\right)$$

The contrastive objective function can then be defined as a sum of $L_k^{\mathrm{GCL}}$ over the training examples in the training set.

The first contrastive term ($A_k$) can be interpreted as a term dependent on the "accepts"; the second contrastive term ($A_k + \gamma B_k$) can be interpreted as an "accepts + rejects" term, i.e., it can include the first contrastive term.

Minimization of the contrastive objective function encourages the sequence processing neural network 104 to assign a higher likelihood (e.g., relative to a corresponding sequence processing neural network of the reference generative neural network system 202) to positive-group training output sequences 108A than to negative-group training output sequences 108A.

As another example, the objective function 124 can be dependent on a combination of the log score difference and the aggregated reward 120A.

The aggregated rewards 120 for the training output sequences 108 for a given training example can be used to determine a target distribution over the training output sequences 108.

For example, for the $k$-th training example, a normalized target distribution $\pi_k^{\mathrm{target}}$ can be defined by a softmax over the aggregated rewards 120 as follows (with $i$ indexing the training output sequences 108, as before, and $n_k$ denoting the number of training output sequences 108 for the training example):

$$\pi_k^{\mathrm{target}}(i) = \frac{\exp\{\mathrm{WN}(a_{k,i})\}}{\sum_{j=1}^{n_k} \exp\{\mathrm{WN}(a_{k,i})\}}$$

Similarly, a "policy" distribution over training output sequences 108 generated by the generative neural network system 102 for the k-th training example can be determined as a softmax over log score differences (as defined above) as follows:

$$p_\theta^{(k)}(i) = \frac{\exp\{l_{k,i}\}}{\sum_{j=1}^{n_k} \exp\{l_{k,j}\}}$$

The objective function 124 for the k-th training example can then be determined as a cross-entropy objective function between the target and policy distributions for the training example:

$$L_k^{\mathrm{CE}}(\theta) = -\sum_{i=1}^{n_k} \pi_k^{\mathrm{target}}(i) \log\left(p_\theta^{(k)}(i)\right)$$

The objective function 124 therefore encourages the sequence processing neural network system 104 to allocate higher probability to training output sequences 108 with larger aggregated rewards 120. Consequently, a training output sequences 108A with a high aggregated reward 120A will be assigned a high weight by the target distribution $\pi_k^{\mathrm{target}}$, thereby incentivizing the model to increase the weight for the training output sequence 108A assigned by the policy distribution $p_\theta^{(k)}$. This can therefore align the policy distribution with the multi-objective consensus specified by the aggregated rewards 120 determined using the plurality of different reward models 114A-N.

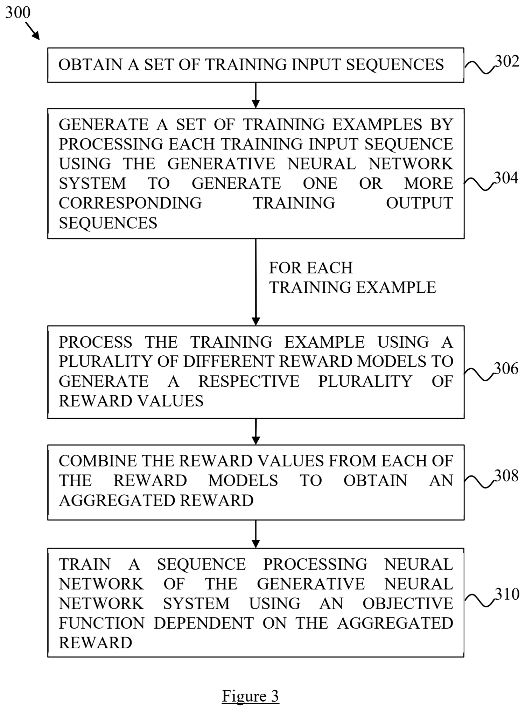

FIG. 3 is a flow diagram of an example process 300 for training a generative neural network system. For convenience, the process 300 will be described as being performed by a system of one or more computers located in one or more locations. For example, a training system, e.g., the training system 100 depicted in FIG. 1 or the training system 200 partially depicted in FIG. 2, appropriately programmed in accordance with this specification, can perform the process 300.

The system obtains (step 302) a set of training input sequences and generates (step 304) a set of training examples by processing each training input sequence using the generative neural network system to generate one or more corresponding training output sequences. Each training example therefore comprises a training input sequence and a set of one or more corresponding training output sequences. The training output sequences can be generated in parallel (e.g., asynchronously) for a given training input sequence in some implementations.

Steps 306-310 are performed for each training example in the set of training examples.

The system processes (step 306) the training example using a plurality of different reward models to generate a respective plurality of reward values. Some or all of the plurality of reward values can be generated in parallel (e.g., asynchronously) for each training example in some implementations

The system then combines (step 308) the reward values from each of the reward models to obtain an aggregated reward.

Finally, the system trains (310) the sequence processing neural network of the generative neural network system using an objective function determined using (i.e., dependent on) the aggregated reward.

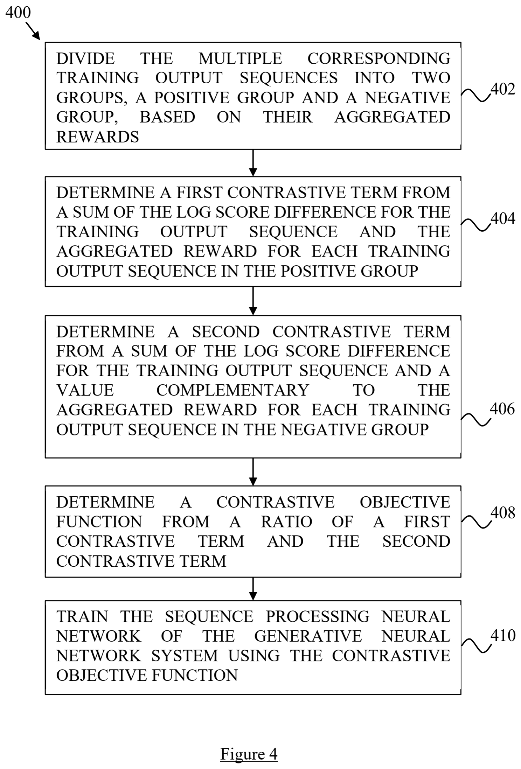

FIG. 4 is a flow diagram of an example process 400 for determining an objective function for use in the process 300 of FIG. 3.

The system divides (step 402) the multiple corresponding training output sequences into two groups, a positive group and a negative group, based on their aggregated rewards.

The system determines (step 404) a first contrastive term from a sum of the log score difference for the training output sequence and the aggregated reward for each training output sequence in the positive group.

The system determines (step 406) a second contrastive term from a sum of the log score difference for the training output sequence and a value complementary to the aggregated reward for each training output sequence in the negative group.

The system then determines (step 408) a contrastive objective function from a ratio of a first contrastive term and the second contrastive term.

Finally, the system trains (step 410) the sequence processing neural network of the generative neural network system using the contrastive objective function.

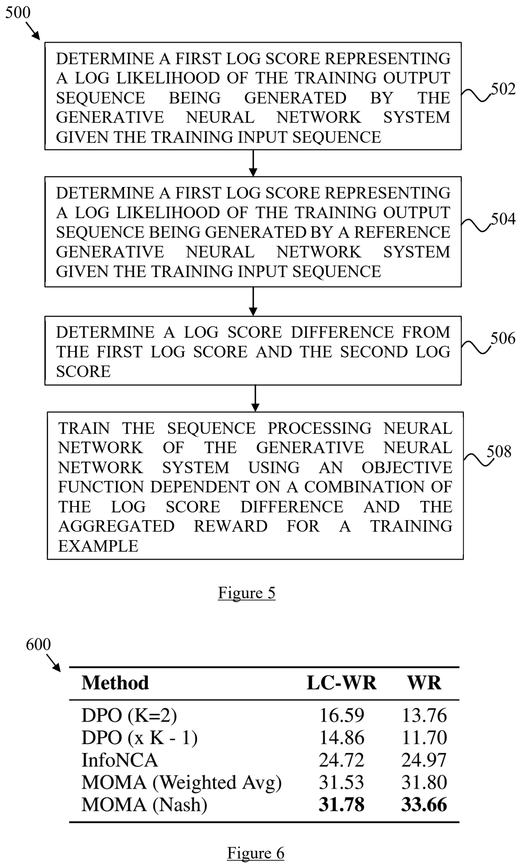

FIG. 5 is a flow diagram of another example process 500 for determining an objective function for use in the process 300 of FIG. 3.

The system determines (step 502) a first log score representing a log likelihood of the training output sequence being generated by the generative neural network system given the training input sequence.

The system determines (step 504) a first log score representing a log likelihood of the training output sequence being generated by a reference generative neural network system given the training input sequence.

The system determines (step 506) a log score difference from the first log score and the second log score.

Finally, the system trains (step 508) the sequence processing neural network of the generative neural network system using an objective function dependent on a combination of the log score difference and the aggregated reward for a training example.

FIG. 6 is a table comparing results for the AlpacaEval benchmark obtained using generative neural network systems trained as described in this specification, e.g., by the example processes 300, 400, 500 described above (referred to as MOMA (Weighted Avg) and MOMA (Nash)), and with systems trained using Direct Preference Optimization (DPO, with K=2 and x K-1 configurations), or a fine-tuning method using Noise Contrastive Alignment (InfoNCA).

Performance was assessed based on two primary metrics: (i) Length-Controlled Win-Rate (LC-WR), a metric designated as "Long Completion - Writing & Reasoning," which evaluates the stylistic quality and logical flow of the generative neural network system's output while correcting for length bias; and (ii) Win-Rate (WR), a metric designated as "Writing & Reasoning," focusing on the output's clarity, factual accuracy, and adherence to specific instructions.

The DPO baselines achieved a maximum LC-WR of 16.59 and WR of 13.76, with InfoNCA showing a moderate improvement over DPO with scores of 24.72 (LC-WR) and 24.97 (WR). Both variants of the disclosed method significantly outperformed the baselines. The MOMA (Weighted Avg) embodiment achieved an LC-WR of 31.53 and a WR of 31.80. The MOMA (Nash) embodiment demonstrated the highest efficacy, achieving an LC-WR of 31.78 and a WR of 33.66.

The experimental results indicate a significant technical advancement over single-reward or pairwise alignment methods. Specifically, the MOMA (Nash) embodiment achieved an approximate 15% improvement in length-controlled win-rate and an approximate 20% improvement in overall win-rate compared to the Mistral-based DPO baseline.

These improvements suggest that the aggregated rewards 120 described in this specification captures alignment quality more effectively than conventional techniques. Furthermore, the present approach strongly penalizes any rewards that are near-zero, thereby preventing the collapse of specific performance attributes and ensuring a more robust and balanced model alignment.

Further details of particular implementations now follow.

In some implementations, the tokens can represent text, e.g., words, wordpieces or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally, the text can be obtained from audio data representing speech; the output tokens may be converted into audio data that represent speech corresponding to the text.

Also or instead, the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network.

As used herein an image may be any still or moving image, i.e. the image may be part of a video, in 2D or 3D, and may be a monochrome, color or hyperspectral image, i.e. comprising monochrome or color pixels. As defined herein an "image" includes a point cloud e.g. from a LIDAR system, and a "pixel" includes a point of the point cloud. An image may have been captured by a camera or other image sensor from the real world; and objects in the image may comprise physical objects, represented by the image.

Also or instead, the tokens may represent an audio waveform. For example, a set (sequence) of input or output tokens can represent audio data representing an waveform e.g. instantaneous audio amplitude values or time-frequency audio data. Each audio token may comprise a block encoding of the audio waveform in a different time segment of the audio that maps a set of values representing the audio waveform to a respective audio token. The block encoder may comprise a neural network, e.g. having one or more (self-)attention layers, such as a Transformer neural network.

Tasks

In implementations the tokens represent text, pixels of an image, or an audio waveform and the generative neural network system is configured to generate the output sequence of tokens to perform a task represented by the input sequence of tokens.

In some implementations the task comprises an image or audio generation task. The input sequence of tokens can then characterize the image or audio to be generated, and the output sequence of tokens can comprise tokens defining an image or audio waveform characterized by the input sequence of tokens, e.g. text tokens.

In some implementations the task comprises an image or audio processing task. The input sequence of tokens can define an image or audio input, and the output sequence of tokens can comprise tokens defining text that describes the image or audio input. As some examples, the task can be a speech recognition task, an object or action detection task, a classification task, a captioning task, a question-answering task, or a character or word recognition task.

In some implementations the task comprises a multimodal processing task. One or both of the input sequence of tokens and the output sequence of tokens can comprise multi-modal data. For example the input sequence of tokens can characterize both an image or audio input and a text input and the output sequence of tokens can comprise tokens defining a result of an image or audio processing task defined by the text, such as an open vocabulary classification or object detection task.

In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform.

Some examples of multi-modal tasks include: open-vocabulary image classification (the output can classify the image input based on a text input comprising text descriptions of one or more classes in the image); open-vocabulary object detection (the output can detect one or more objects in the image input based on a text input comprising text descriptions of the one or more objects); image captioning (the output can comprise text that describes the image input); text-based image search (the output can identify from amongst multiple images in the image input one or more images that meet a text description of images to be retrieved, the text description being provided in a text input); image-based retrieval (the output can identify from amongst multiple images in the image input one or more images that match a further image in the image input), and so on. The multi-modal processing task to be performed can be defined by text in the input sequence.

In some implementations the task comprises an agent control task in which the agent interacts with an environment to perform the task. The agent can be a mechanical agent such a robot or (semi-)autonomous vehicle, interacting with a real-world environment to perform the task. The generative neural network system can be trained to control a simulated version of the agent in a simulated version of the environment and then afterwards used to control the real agent in the real-world environment. The input sequence of tokens can comprise tokens that represent an observation of the environment, e.g. an image captured by a camera or other imaging device from a real-world environment. The output sequence of tokens comprises tokens that define one or more actions to be performed by the agent in the environment in response to the observation.

Further examples of tasks are described later.

Training datasets

There are many suitable training datasets available, depending on the task to be performed. Just as some examples, these include, for text: WebLI (Web Language Image, Chen et al. arXiv:2305.18565v1). Some examples for images include: the Visual Genome dataset for Visual Question Answering (Krishna et al., arXiv:1602.07332); Objects365 (Shao et al., "Objects365: A large-scale, high-quality dataset for object detection", IEEE/CVF international conference on computer vision, pages 8430-8439); Open Images V4 (Kuznetsova et al., arXiv:1811.00982); the SBU dataset (Ordonez et al. "Im2Text: Describing Images Using 1 Million Captioned Photographs", NeurIPS 2011); the Conceptual Captions datasets, e.g. V1 (2M images) or V2 (10M images) (Sharma et al., "Conceptual Captions: A Cleaned, Hypernymed, Image Alt-text Dataset For Automatic Image Captioning", ACL 2018); and Kinetics for video (Kay et al., arXiv:1705.06950). An example for audio data is AudioSet (Gemmeke et al., "Audio set: An ontology and human-labeled dataset for audio events," ICASSP, IEEE, 2017, pp. 776-780). An example training dataset for agent (robot) control is described in Ebert et al., arXiv:2109.13396.

In general a training dataset for a particular task may comprise task-specific training examples that have been manually generated by a human being and/or task-specific training data may be generated automatically using existing tools. For example an OCR (Optical Character Recognition) task dataset may be generated by applying an OCR tool to a corpus of images; or an object detection task that requires generating object bounding-box coordinates may be generated by applying an existing object detection tool, such as a trained neural network, to a corpus of images; or a set of aligned image and text representations may be generated using ALIGN (Jia et al., arXiv:2102.05918); or instruction-annotated robot trajectories may be obtained as described in Brohan et al., arXiv:2212.06817, in either the real-world or in simulation.

Further aspects of example implementations

LLMs commonly optimize for a single reward signal (e.g., helpfulness), risking deficits in accuracy, safety, or fairness. Users expect high-quality answers across multiple dimensions (correctness, respectfulness, compliance). A single metric focus can lead to unintended behaviors (e.g., overly safe but unhelpful responses). It is useful to develop a multi-objective, multi-preference framework that balances multiple alignment criteria (accuracy, safety, style, etc.) without sacrificing one for another.

Treating feedback as "better vs. Worse" pairs overlooks the fact that there can be many correct ways to answer and many ways to fail. Multi-preference data collects multiple acceptable (positive) responses to highlight varied styles or reasoning, and gathers multiple rejected (negative) samples to expose different types of mistakes (factual errors, disrespect, irrelevance). The result is a richer training signal that trains models to discriminate fine-grained good/bad responses, improving alignment.

Reinforcement Learning from Human Feedback typically combines user preferences into a single reward, risking overemphasis on one dimension (e.g., helpfulness) ignoring others (truthfulness, style). DPO is a pairwise approach (one positive vs. one negative) that captures a single dimension of "preference" and loses granularity. A problem is that there is no direct, unified way to handle multiple objectives; and also no good way to handle diverse "good"/"bad" examples. There can be scalability issues when introducing additional reward criteria.

The described techniques (MOMA - Multi-Objective Multi-Preference Alignment) uses multiple reward models to capture correctness, safety, style, fairness, and more. It can also use multi-preference data with many "good" and "bad" examples per query. This can avoid blind spots from focusing on a single reward. Multi-preference optimization can leverage the variety in positive and negative examples for nuanced alignment. The described techniques can be easily integrated into existing workflows.

In general responses should be correct, respectful, policy-compliant, brand-safe, and so on, but a single-minded focus on correctness could ignore harmful content or style constraints. Some examples are Correct but offensive (e.g. Good factual content, but uses insensitive language); polite but incomplete (e.g. Safe tone but misses key information); and harmful instructions (e.g. Precisely follows user query but violates safety or policy).

In practice there can be trade-offs, e.g. between accuracy and harmlessness, helpfulness and brevity, and safety and over-censorship. The ability to use multiple reward models, e.g. factual, safety, style, fairness, lack of bias, etc., can mitigate this. The described techniques enable balanced improvements across such dimensions rather than excelling in just one.

Similarly, just using one good and one bad example in a contrastive approach can fail to capture nuanced differences in partial correctness or style variation. the use of multiple positive examples can help capture multiple valid solutions or writing styles. the use of multiple negative examples can help encompasses varied error types (e.g. factual, style, harmful content). A model trained on multi-preference data can better navigates the full space of success/failure modes.

The described approaches can encourage responses favored by all reward models and penalize those disliked by any one model. They can also handle multiple "good" or "bad" samples per query in a single objective.

Implementations of the techniques combine independent reward model scores, via Nash or Weighted Nash, inhibiting single-dimensional overfitting. The techniques are flexible - it is easy to add or remove reward models, can easily adapt a model to new preference data.

An example workflow can involve the following steps:

Collect a large set of diverse prompts; each can have multiple possible outputs ranging from correct to partially correct or wrong. Aim to reflect real-world issues.

Use a baseline/reference model to produce candidate outputs. Sample multiple variations to cover different styles or reasoning paths, and label them as "positive" or "negative" (or "mixed"), e.g. using an initial filter or heuristic.

Deploy specialized reward models for correctness, safety, style, etc. Each reward model scores or classifies every candidate response. This is expandable to new dimensions (e.g. brand compliance, fairness, domain-specific checks).

Combine the reward model outputs to label each candidate "accepted" by all or several reward models or "rejected" for failing at least one dimension. Gather multiple "good" and multiple "bad" samples for each prompt to capture diverse successes/failures.

Use the above described techniques to combine the multiple rewards, and optionally the multi-preference data. The policy learns to generate responses that maximize the rewards, i.e. The policy learns to generate responses that are likely to be universally accepted responses and avoid generating responses that are partial failures i.e. That do not receive a significant reward from one or more reward models.

The learned policy can be tested on benchmarks (e.g., AlpacaEval, MTBench) to measure improvements in correctness, helpfulness, safety, etc. It can be checked that multi-objective training actually mitigates trade-offs (e.g., does not degrade correctness for safety). Optionally the model weights can be refined and/or reward models can be added or dropped, based on observed performance.

Example hardware implementations

In some implementations the generative neural network system, e.g. a language model or a visual language model, is stored on a user computing device, i.e. a device local to the user, such as a mobile device e.g. a mobile phone, or a smart speaker.

In some implementations the generative neural network system is implemented on a remote server in communication with a user computing device over a wired or wireless network communications link between the user computing device and the server.

The user computing device may be provided with an input mechanism, such as a text or voice interface, that enables user input from the user in a natural language. The user computing device may be provided with an output mechanism that provides a system output for the user in the or another natural language e.g. as speech or text; or in some other way, e.g. by displaying an image. The input and output mechanism may comprise, e.g., a keyboard, microphone, speaker, display, and/or camera.

As an example, the input mechanism may comprise a system configured to input audio data characterizing a speech waveform of speech representing the input from the user in a natural language, and configured to convert the audio data into tokens representing the speech in the natural language, e.g. representing a transcription of the spoken input. The output mechanism may comprise a system configured to receive tokens representing the output for the user in the or another natural language and a system configured to convert the received tokens into audio data representing a waveform of speech representing the output to the user in the natural language, i.e. representing spoken words.

As a further example, the trained system can be deployed in an environment that enables a user to provide a request for the system, e.g. to process a multimodal input to generate a corresponding output sequence output. A user can provide the request, e.g., by way of a user interface or through an application programming interface (API). The request can be transmitted from a user device, e.g., over a data communications network such as the internet, to one or more computers implementing the system, e.g., in a data center. The system can generate an output sequence and then transmit the output sequence to a user device over a data communications network.

Further example applications

A user computing device may be provided as an interface for the generative neural network system, with an input mechanism that enables user input from the user in a natural language and an output mechanism that provides a system output to the user in the natural language. The input and output mechanism may comprise, e.g., a keyboard and display. Also or instead the input and output mechanism may comprise a speech-based mechanism. For example the input mechanism may comprise a system configured to input audio data characterizing a speech waveform of speech representing the input from the user in the natural language and configured to convert the audio data into tokens representing the speech in the natural language, e.g. representing a transcription of the spoken input. The output mechanism may comprise a system configured to receive tokens representing the output to the user in the natural language and a system configured to convert the received tokens into audio data representing a waveform of speech representing the output to the user in the natural language, i.e. representing spoken words.

In some implementations the input sequence comprises one or more natural language statements relating to an environment, in particular a real-world environment, and includes a natural language request relating to the environment. Similarly the output sequence may be a natural language reply or natural language output statement that also relates to the environment i.e. it provides information relating to the environment, in some implementations relating to or specifying actions to be taken in the environment.

The (trained) generative neural network system can be used for diagnosing a fault, or for correcting undesired behavior, in a mechanical or computing system operating in the real world environment. The input may comprise a description and/or image of one or more observations of the mechanical or computing system, e.g. of operation of the system, optionally obtained from one or more sensors sensing a condition or operation of the system. An image observation may be converted into a text description e.g. using an image captioning system or in other ways. The generated output sequence may comprise an image, audio, or text that identifies (described) a likely cause of the fault or undesired behavior. This may be used to repair the fault or correct the behavior. The reward models can define relatively more useful types of output for repairing the fault or correcting the behavior, and other aspects of the response as previously described.

The (trained) generative neural network system can be used for controlling a mechanical agent such as a robot or vehicle. For example the input may comprise a description of a task to be performed, and the generated output sequence may comprise a list of sub-tasks to be performed by the mechanical agent (trained to perform such sub-tasks), in order to perform the task. The reward models can define relatively more preferable or useful types of sub-task, task safety, efficiency, and so on.

As another example, the environment can be a computer security monitoring environment, e.g., the system can be deployed as part of a system that monitors the security of one or more computers. For example, the environment may be a computer network security monitoring environment, and the system can be deployed as part of a system that monitors the security of one or more computers on a computer network, e.g. a wireless network, a cellular network, a local area network and/or the internet. As another example, the environment may alternatively or additionally be a computer system security monitoring environment and the system can be deployed as part of a system that monitors the system for the presence of computer viruses and/or an unresolved software vulnerability, e.g. a zero-day exploit. A software vulnerability may be resolved by updating the software (e.g. patching) and/or removing (e.g. uninstalling) the software from the computer system. In these examples, the natural language request can query whether a computer security incident has been resolved (e.g., "has the incident been resolved?") and the input sequence may comprise relevant statements from system logs, i.e., that are potentially relevant to the event being queried. A computer security incident can be, e.g., a data breach, an unauthorized log-in or other access of a secured system, a detection of a computer virus or detection of a software vulnerability. The incident can be "resolved" when the underlying incident is no longer a threat to the security of the computer system e.g., the computer virus has been removed, the access to the secured system has been removed, the data breach has been mitigated, or the software having the vulnerability has been updated or removed. The system can use the input sequence to generate a reply to the request that comprises a natural language statement indicating whether the incident has been resolved, optionally displaying evidence used to determine this.

The input sequence may include one or more of: code snippets from the software code, system logs, program logs, or other artifacts that should be left on the computer by running the program, or verification rules that represent requirements for the execution of the software program, or natural language statements describing the computer system on which the software executes. In general the input sequence may include relevant statements, i.e., statements that are potentially relevant to the event being queried.

In some implementations obtaining the input sequence may comprise obtaining, from the system logs, the data characterizing the computer network, or both, or from other data as described above, one or more observations of the computer network (which here includes computers on the network), and processing the one or more observations to generate a natural language representation of the one or more observations. The natural language request may relate to the computer security incident or to the secure operation of the computer network. The method may include using the natural language representation of the one or more observations to provide one or more of the natural language statements describing the computer network, and using the natural language reply or the natural language output statement to identify a security status of the computer network or a security flaw in the computer network.

As another example, the environment can be a software testing or evaluation environment, e.g., the system can be deployed as part of a system that tests software before deployment or that evaluates already-deployed software to identify bugs. In these examples, when the system tests software before deployment, the natural language request can ask whether the software will execute as intended, and the input sequence can include code snippets from the software code and, optionally, natural language statements describing the computer system on which the software will execute. The system can then use the input sequence to generate a reply that indicates whether the code will execute as intended, optionally displaying evidence used to determine this. When the system monitors the execution of code after deployment, the natural language request can ask whether a software program, or a portion of a software program, has executed as intended, and the input sequence can include one or more of: code snippets from the software code, system logs, program logs, or other artifacts that should be left on the computer by running the program, or verification rules that represent requirements for the execution of the software program, or natural language statements describing the computer system on which the software executes. The system can then use the input sequence to generate a reply that indicates whether the code has executed as intended, optionally displaying evidence used to determine this. As a particular example, the software program can be part of the boot up of a computer, and the system can generate a reply each time that the computer starts up to verify whether the computer will function correctly after start up.

As another example, the environment can be an educational environment, e.g., the system can be deployed as part of an education software program that assists a user in learning or practicing one or more corresponding skills. In these examples, the input sequence can include natural language statements describing or referencing a scenario or scene in a real-world or imagined environment, and the request can be a question about the scenario or scene.

As another example, the environment can be an information retrieval environment, e.g., the system can be deployed as part of a search engine or other software that allows a user to search for information in a corpus of documents, e.g., the Internet or another electronic document corpus. In these examples, the request can be any appropriate natural language question, and the reply can optionally include evidence such as include relevant statements from the corpus of documents, e.g. as identified by searching the corpus using conventional information retrieval techniques.

In some implementations, the language model neural network is a visual language model (VLM). In general, the VLM may process input sequences comprising tokens that each represent natural language or (a part of) an image or video to generate output tokens that each represent natural language or (a part of) an image or video. For example, the VLM may be configured to describe an image or video using natural language, e.g., to perform an image or video captioning task. As another example, the VLM may be configured to process input tokens representing an image and text tokens representing a query about the image or a request to modify the image, and to generate output tokens representing an answer to the query or representing a version of the image that has been modified in accordance with the request. The VLM may generate output tokens representing an image or video that is generated in response to input tokens providing a visual and/or audio and/or textual description of a desired image or video.

In some implementations, the "language" of the language model is not a natural language such (e.g. English), but may instead be a text-based encoding describing an entity or class of entities, e.g. a chemical or biological entity, such as a chemical structure or molecule. For example, the text-based encoding may be an sequence of tokens that defines a molecule or protein, e.g. a sequence specifying an arrangement of atoms or chemical functional groups in a molecule, or the amino acid residues of a protein. The language model may be referred to as a chemical and/or biological language model in such cases. The input for the language generation neural network may therefore be an input string defining a chemical (e.g. protein) structure and the output may be an output string defining a different chemical structure from the input string. The strings may be in the Simplified Molecular Input Line Entry System, SMILES, format, for example.

In another example of a computer language text generation task, a task-specific training example may comprise an image or video and a sequence of text in a computer language for performing a task in relation to the image or video, e.g. a data processing task that involves analyzing the content of the image or video to provide a result of the analysis or, e.g., a search to search for information relating to the content of the image or video. The computer language in the model output may comprise computer language for invoking a function or calling one or more external APIs. Merely as one example, such an output may be formatted as a JSON object. As previously, the sequence of text in the multimodal input may define the task to be performed and the second modality input may comprise, e.g. an image or video in relation to which the task is to be performed, e.g. a task that involves manipulation of particular types of data that may benefit from access to an API such as mathematical data, date/time related data, scientific data, recent data that may post-date training of the model (that may be accessed by a search function or API), and so on. After training, when the model is used in inference, the model output may comprise text in the or another computer language for performing a task, e.g. as described above, in relation to an image or video in the second modality input. The method may then include using the text in the computer language to perform the task.

In some implementations, the language model neural network may be used to interact with a human user of a digital assistant such as a smart speaker, smart display, or other device. For example, information defining a task can be obtained from the digital assistant, and the digital assistant can be used to instruct the user to perform the task. For example, this may comprise receiving, at the digital assistant, a request from the user for assistance and determining, in response to the request, a series of tasks for the user to perform, e.g. steps or sub-tasks of an overall task. Then for one or more tasks of the series of tasks, e.g. for each task, e.g. until a final task of the series the digital assistant can be used to output to the user an indication of the task, e.g. step or sub-task, to be performed. This may be done using natural language, e.g. on a display and/or using a speech synthesis subsystem of the digital assistant. Visual, e.g. video, and/or audio observations of the user performing the task may be captured, e.g. using the digital assistant. A system may then be used to determine whether the user has successfully achieved the task e.g. step or sub-task, i.e. from the answer as previously described. If there are further tasks to be completed the digital assistant may then, in response, progress to the next task (if any) of the series of tasks, e.g. by outputting an indication of the next task to be performed. In this way the user may be led step-by-step through a series of tasks to perform an overall task.

As an illustrative example, a user may be interacting with a digital assistant and ask for help performing an overall task consisting of multiple steps, e.g. cooking a pasta dish. While the user performs the task, the digital assistant receives audio and/or video inputs representative of the user's progress on the task, e.g. images or video or sound clips of the user cooking. The digital assistant uses a system as described above, in particular by providing it with the captured audio and/or video and a question that asks whether the user has completed a particular step, e.g. 'Has the user finished chopping the peppers?', to determine whether the user has successfully completed the step. If the answer confirms that the user has successfully completed the step then the digital assistant progresses to telling the user to perform the next step or, if at the end of the task, or if the overall task is a single-step task, then the digital assistant may indicate this to the user. The digital assistant may then stop receiving or processing audio and/or video inputs to ensure privacy and/or reduce power use.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog. The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g. of a series of tasks, e.g. until a final task of the series. More particularly, the assistance control subsystem can output to the user an indication of the task to be performed, capture, using the observation capture subsystem, visual or audio observations of the user performing the task, determine from the above-described answer whether the user has successfully achieved the task. In response, the digital assistant can progress to a next task of the series of tasks and/or control the digital assistant, e.g. to stop capturing observations.

Further example multimodal applications

The generative neural network system may comprise a multimodal machine learning system such as a visual language model (VLM). That is implementations of the generative neural network system can perform a multimodal task in which the input and output sequence, collectively, comprise data of multiple different types. As used herein text can include numbers, punctuation, special symbols, and so on.

In some implementations, after training, a particular task that is to be performed by the generative neural network system can be described by part or all of a sequence of text in the input to the system. For example in an input that includes an image such a prompt might specify "Generate a caption", "Generate a description", "Answer the following question: [about the image or video]", or "Detect a person". Where the system is used for an agent control task a prompt may define "Take the knife out of the drawer", or "Q: What action should the robot take to take the knife out of the drawer?". Also or instead such a prompt may give one or more examples of a task to be performed. The generative neural network system can be trained on multiple natural and/or computer languages and the prompt may then specify a language to use.

A few further examples of some machine learning tasks that can be performed by a system trained as described herein follow. The tasks described below may be tasks that require spatial awareness or other context from the image or video. For example, a prompt may ask "What is the object in the top left corner?".

In general for the tasks below the system can have been trained or fine-tuned on examples of the input and output for the task. For example the system can have been trained using still or moving images containing one or more objects or actions, and corresponding sequences of text or other data e.g. describing or classifying the images. However large, "foundation" models can, in general, perform some tasks zero-shot, i.e. without having been specifically trained on those tasks.

As one example the task may comprise an object or action detection task. For example the generated output sequence may comprise or represent text that describes or otherwise labels detected object(s) or action(s) in a input comprising an image or audio, and may include coordinates such as bounding-box coordinates for the detected object(s) or action(s), e.g. "10 20 90 100 cat 20 30 100 100 dog".

As another example the task may comprise a classification task, e.g. an object or action classification task. The generated output sequence may comprise data, e.g. text, that classifies the object(s) or action(s) in represented in the conditioning data, e.g. in an image or audio, into one of a plurality of classes, or that otherwise classify object(s) or action(s) represented in the conditioning data.

As another example the task may comprise a still or moving image describing task, e.g. a captioning task (which, as used here, includes an audio description task to explain what is happening in an image). The generated output sequence may comprise data, e.g. text, describing an image or video in the conditioning data. For example the generated output sequence may provide a caption or description or it may count objects in the image or video, or it may provide some other form of description.

As another example the task may comprise a still or moving image question-answering task. The generated output sequence may comprise data, e.g. text, that answers a question about the input, e.g. an image or audio, where the question is also specified in the input, e.g. as sequence of text. This may be used, e.g., to answer questions about visual plots and charts or about sounds.

As another example the task may comprise a character or word recognition task, e.g. an OCR (optical character recognition) task. The input may comprise a still or moving image and the generated output sequence may comprise text that represents characters or words in the input, e.g. in a natural language.

As another example the task may comprise a still or moving image generation task. The generated output sequence may comprise image data defining values for pixels of a still or moving image, and the input, e.g. a sequence of text, may describe or characterize the image to be generated. Merely as an example, an image of a plot or chart may be generated to represent the input, e.g. comprising text.

As another example the task may comprise a computer language text generation task. The conditioning data may comprise a natural language description of a task to be performed, and optionally an image (if the task is to be performed on or in relation to an image), and the generated output sequence may comprise text in a computer language to perform the task, e.g. a task of analyzing the content of the image to provide a result of the analysis or to search for information relating to the content of the image.

As a particular example the computer language in the generated output sequence may comprise computer language for invoking a function or calling one or more external APIs. Merely as one example, such a output sequence may comprise data formatted as a JSON object. As previously, the input may define the task to be performed and may also include an image in relation to which the task is to be performed. In general the task can involves manipulation of particular types of data that may benefit from access to an API such as mathematical data, date/time related data, scientific data, recent data that may post-date training of the system (that may be accessed by a search function or API), and so on; and the generated output sequence may comprise text in a computer language for performing the task. The method may then include using the text in the computer language to perform the task.

In general where the generated output sequence comprises text this may be converted to speech representing the text, and an audio (speech) output provided.

In some implementations the task comprises an agent control task in which the agent interacts with an environment to perform the agent control task. In these implementations the input can include an observation characterizing the environment. For example the input can include a sequence of text that defines the task to be performed by the agent and the image can represent an observation of the environment, e.g. captured by a camera or other imaging device from a real-world environment. The generated output sequence can comprise an action selection output, e.g. including text, that is used to select one or more actions to be performed by the agent in the environment in response to the observation. As an illustration the generated output sequence may define an action as text such as "A: 132 114 128 5 25 156", that can be converted into a control signal for a mechanical agent, such as a robot, e.g. "$\Delta T$ = [0.1, -0.2,0] $\Delta R$ = [10°,25°, -7°]". The action selection output may also or instead define one or more low-level skills, e.g. from a vocabulary of previously learnt skills. As before, the sequence of text in the input to the system may describe the task to be performed, e.g. "What action should the robot take to [perform task]". Examples of systems for controlling an agent that may be fine tuned as described herein can include PaLM-E (Driess et al. arXiv:2303.03378), RT-1 (Brohan et al. arXiv:2212.06817), and RT-2 (Brohan et al. arXiv:2307.15818).

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations may include, e.g., one or more of: images, object position data, and sensor data to capture observations as the agent interacts with the environment. The actions may define control signals to control the robot or other mechanical agent, e.g., positions, torques, or other control signals for the parts of the mechanical agent, or higher-level control commands.

In some agent control implementations the agent may be a human agent and the environment may be a real-world environment. For example the agent can be a human user of a digital assistant such as a smart speaker, smart display, or some other device that is used to instruct the user to perform actions. The task may be any real-world task that the user wishes to perform. The observations may be obtained from an observation capture subsystem, e.g. a monitoring system such as a video camera or sound capture system, to capture visual observations of the user performing the task. The actions may comprise instructions in the form of, e.g., text, image, video, or audio data such as speech, that guide the user in performing the task.

Further sequence processing examples

The described systems and techniques may be applied to a wide range of different types of input sequence and output sequence. In implementations of the described techniques the tokens may represent, characterize, or encode any type of information in a sequence e.g. stream of data. The term "represent" is used, below, generally to refer to any way in which a token can encode part of a sequence. The tokens may include marker tokens, such as a start of sequence token, an end of sequence token, and a separator token (indicating a separation or break between two distinct parts of a sequence). The tokens may, but need not be, drawn from a defined vocabulary of tokens.

Some of these implementations may be used for natural language tasks such as providing a natural language response to a natural language input, e.g. for question answering, or for text completion. In some implementations the input sequence may represent text in a natural language and the output sequence may represent text in the same natural language, e.g. a longer item of text. For example in some implementations the input sequence may represent text in a natural language and the output sequence may represent the same text with a missing portion of the text added or filled in. For example the output sequence may represent a predicted completion of text represented by the input sequence. Such an application may be used, e.g. to provide an auto-completion function e.g. for natural language-based search. In some implementations the input sequence may represent a text in a natural language e.g. posing a question or defining a topic, and the output sequence may represent a text in a natural language which is a response to the question or about the specified topic.

As another example the input sequence may represent a first item of text and the output sequence may represent a second, shorter item of text e.g. the second item of text may be a summary of a passage that is the first item of text. As another example the input sequence may represent a first item of text and the output sequence may represent an aspect of the first item of text e.g. it may represent an entailment task, a paraphrase task, a textual similarity task, a sentiment analysis task, a sentence completion task, a grammaticality task, and in general any natural language understanding task that operates on a sequence of text in some natural language e.g. to generate an output that classifies or predicts some property of the text. For example some implementations may be used to identify a natural language of the first item of text, or of spoken words where the input is audio (as described below).

Some implementations may be used to perform neural machine translation. Thus in some implementations the input tokens represent words, wordpieces, or characters in a first natural language and the output tokens represent words, wordpieces or characters in a second, different natural language. That is, the input sequence may represent input text in the first language and the output sequence may represent a translation of the input text into the second language.

Some implementations may be used for automatic code generation. For example the input tokens may represent words, wordpieces or characters in a first natural language and the output tokens may represent instructions in a computer programming or markup language, or instructions for controlling an application program to perform a task e.g. build a data item such as an image or web page.

Some implementations may be used for speech recognition. In such applications the input sequence may represent spoken words and the output sequence may represent a conversion of the spoken words to a machine-written representation e.g. text. Then the input tokens may comprise tokens representing an audio data input including the spoken words e.g. characterizing a waveform of the audio in the time domain or in the time-frequency domain. The output tokens may represent words, wordpieces, characters, or graphemes of a machine-written, e.g. text, representation of the spoken input, that is representing a transcription of the spoken input.

Some implementations may be used for handwriting recognition. In such applications the input sequence may represent handwritten words, syllabograms or characters and the output sequence may represent a conversion of the input sequence to a machine-written representation e.g. text. Then the input tokens may comprise tokens representing portions of the handwriting and the output tokens may represent words, wordpieces, characters or graphemes of a machine-written, e.g. text, representation of the spoken input.

Some implementations may be used for text-to-speech conversion. In such applications the input sequence may represent text and the output sequence may represent a conversion of the text to spoken words. Then the input tokens may comprise tokens representing words or wordpieces or graphemes of the text and the output tokens may represent portions of audio data for generating speech corresponding to the text, e.g. tokens characterizing a portion of a waveform of the speech in the time domain or in the time-frequency domain, or phonemes.

Some implementations may be used for a genomics task, where the input sequence represents a fragment of a DNA sequence or other molecule sequence and the output sequence is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the system is configured to perform multiple different individual machine learning tasks, e.g., two or more of the machine learning tasks mentioned above. For example, the system can be configured to perform multiple individual natural language understanding tasks, with the network input including an identifier for the individual natural language understanding task to be performed on the network input.

In some implementations the input sequence and the output sequence represent different modalities of input. For example the input sequence may represent text in a natural language and the output sequence may represent an image or video corresponding to the text; or vice-versa. In general the tokens may represent image or video features and a sequence of such tokens may represent an image or video. There are many ways to represent an image (or video) using tokens. As one example an image (or video) may be represented as a sequence of regions of interest (RoIs) in the image, optionally including one or more tokens for global image features. For example an image may be encoded using a neural network to extract RoI features; optionally (but not essentially) a token may also include data, e.g. a position encoding, representing a position of the RoI in the image. As another example, the tokens may encode color or intensity values for pixels of an image. As another example, some image processing neural network systems e.g. autoregressive systems, naturally represent images as sequences of image features. As another example, a transformer-based sequence processing neural network system as previously described may be used to process images instead of or as well as text (e.g. if trained on images instead of or as well as text).

Thus in some implementations at least one of the input sequence and the output sequence is a sequence representing an image or video, and the tokens represent the image or video. For example the input sequence may be a sequence of text, the input tokens may represent words, wordpieces, or characters and the output sequence may comprise output tokens representing an image or video e.g. described by the text, or providing a visual answer to a question posed by the text, or providing a visualization of a topic of the text. In another example the input sequence may comprise a sequence of input tokens representing an image or video, and the output tokens may represent words or wordpieces, or characters representing text e.g. for a description or characterization of the image or video, or providing an answer to a question posed visually by the image or video, or providing information on a topic of a topic of the image or video.

In some other implementations both the input sequence and the output sequence may represent an image or video, and both the input tokens and the output tokens may represent a respective image or video. In such implementations the method/system may be configured to perform an image or video transformation. For example the input sequence and the output sequence may represent the same image or video in different styles e.g. one as an image the other as a sketch of the image; or different styles for the same item of clothing.

In some implementations the input sequence represents data to be compressed, e.g. image data, text data, audio data, or any other type of data; and the output sequence a compressed version of the data. The input and output tokens may each comprise any representation of the data to be compressed/compressed data e.g. symbols or embeddings generated/decoded by a respective neural network.

In some implementations the input sequence represents a sequence of actions to be performed by an agent e.g. a mechanical agent in a real-world environment implementing the actions to perform a mechanical task. The output sequence may comprise a modified sequence of actions e.g. one in which an operating parameter, such as a speed of motion or power consumption, has a limited value; or one in which or safety or other boundary is less likely to be crossed. Then both the input tokens and the output tokens may represent the actions to be performed.

In some implementations the input sequence represents a sequence of health data and the output sequence may comprise a sequence of predicted treatment. Then the input tokens may represent any aspect of the health of a patient e.g. data from blood and other medical tests on the patient and/or EHR (Electronic Health Record) data; and the output tokens may represent diagnostic information e.g. relating to a disease status of the patient and/or relating to suggested treatments for the patient, and/or relating to a likelihood of an adverse health event for the patient.

As a particular example the sequence processing neural network can comprise a multimodal model neural network in which one or both of the model input (i.e. input sequence) and the model output (i.e. output sequence) comprise an image or audio. For example the multimodal machine learning model may be configured to process an input sequence comprising visual tokens representing pixels of a still or moving image (which here may include a point cloud image), and/or data representing an audio waveform e.g. values or features of the audio waveform such as audio tokens, and/or text tokens representing a sequence of text, to generate an output sequence e.g. comprising text tokens representing the still or moving image or audio waveform, and/or comprising a sequence of intensity value inputs for the pixels of an image or a sequence of values defining an audio waveform. A visual token may, e.g., represent multiple pixels in a region of the image, e.g. as features of the region. Such a multimodal model may perform any of the previously described tasks, e.g. using a multimodal input, or by providing a multimodal output, or by converting between different input and output modes (e.g. text/image/audio). For example it may generate text representing, describing (e.g. captioning), or otherwise characterizing an image or audio input, e.g. by answering a question related to the image or audio input, e.g. relating to a future e.g. physical prediction of a state of objects represented by the image or audio. As another example it may generate an image or audio represented, described, or otherwise characterized by a text input, or otherwise in response to the text input, e.g. representing an image or audio answer to a text question.

Language models

As previously mentioned, the sequence processing neural network may be a language model or vision language model neural network. In general, a (vision) language model neural network can be a neural network that has been trained so that, given a text prompt that includes a sequence of tokens in a natural language, the neural network can generate the next token in the sequence. This process can be repeated to extend the text prompt one token at a time to generate a natural language output, i.e., to generate the natural language output auto-regressively token by token. At each time "time step," the language model neural network processes the current sequence to generate a probability distribution over a vocabulary of tokens. The next token can then be selected using the probability distribution, e.g., by sampling from the distribution using nucleus sampling or another sampling technique or by selecting the highest-probability token. The tokens in the vocabulary can include any of a variety of tokens, e.g., some combination of words, sub-words, characters, punctuation and other symbols, and numbers. In general, the language model neural network is trained on a corpus of text made up of tokens from the vocabulary (and optionally other tokens that can be mapped to a designated out-of-vocabulary token), to predict the next token in a sequence of tokens from the training data. The (vision) language model neural network can comprise an autoregressive Transformer neural network.

A (vision) language model neural network can be made to perform a particular task by providing a natural language description of the desired response as an input or "prompt" (input sequence). In some cases, the prompt may be a few-shot prompt where a few, e.g., 1 to 10, examples of a query and an example output are provided in the text prior to the actual query.

Instead or in addition, a (vision) language model neural network may be "fine-tuned" to perform a particular task, by obtaining a pre-trained language model neural network trained on a large corpus of examples as previously described and then further training part of all of the language model neural network on a relatively small number of examples particular to the type of task that is to be performed.

The (vision) language model neural network may be a large language model neural network, e.g., one that has greater than 1 billion, 10 billion or 100 billion trained parameters. The (vision) language model neural network may have been trained on greater than 10 billion, 100 billion or 1000 billion words or tokens representing words or other tokens.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Aspects of the present disclosure are also set out in the following numbered clauses:

Clause 1. A computer-implemented method of training a generative neural network system, the generative neural network system configured to generate an output sequence by processing an input sequence using a sequence processing neural network, the method comprising:

obtaining a set of training examples, each training example comprising a training input sequence and a set of one or more corresponding training output sequences, wherein the obtaining comprises processing each training input sequence using the generative neural network system to generate each of the one or more corresponding training output sequences; and, for each of the training examples:

processing the training example using a plurality of different reward models to generate a respective plurality of reward values;
combining the reward values from each of the reward models to obtain an aggregated reward; and
training the sequence processing neural network of the generative neural network system using an objective function determined using the aggregated reward.

Clause 2. The method of clause 1, wherein combining the reward values from each of the reward models to obtain an aggregated reward comprises determining a product of the reward values.

Clause 3. The method of clause 1 or 2, wherein determining the product of the reward values comprises determining a weighted geometric mean of the reward values.

Clause 4. The method of any of clauses 1-3, wherein the aggregated reward comprises a Nash score or a weighted Nash score of the reward values.

Clause 5. The method of any of clauses 1-4, wherein processing the training example using the plurality of different reward models comprises:
processing the training input sequence and each of the one or more corresponding training output sequences using each of the different reward models to generate the respective plurality of reward values.

Clause 6. The method of any of clauses 1-5, further comprising, for each of the training examples:
for each of the corresponding training output sequences to the training input sequence of the training example:

determining a log score difference representing a relative log likelihood of the corresponding training output sequence being generated by the generative neural network system and being generated by a reference generative neural network system, given the training input sequence; and wherein
the objective function is determined using a combination of the log score difference and the aggregated reward for a training example.

Clause 7. The method of clause 6, wherein the objective function comprises a cross-entropy loss between a distribution of the log score differences and a target distribution defined by the aggregate reward.

Clause 8. The method of clause 7, comprising determining the cross-entropy loss for each of the training examples as a product of a first cross-entropy term dependent upon the aggregated reward and a second cross-entropy term that represents the log score difference.

Clause 9. The method of clause 8, wherein the set of one or more corresponding training output sequences comprises multiple training output sequences corresponding to the training input sequence; and for each of the training examples:
determining the cross-entropy loss as a sum, over each of the training output sequences in the training example, of a product of the first cross-entropy term and the second cross-entropy term for the respective training output sequence; and further comprising:

determining each respective first cross-entropy term by converting the aggregated reward for the respective training output sequence in the training example into a respective logit; and
determining each respective second cross-entropy term as a respective softmax of the log score difference over the log score differences for the training output sequence in the training example.

Clause 10. The method of any of clauses 8-9, wherein each training example comprises the training input sequence and multiple corresponding training output sequences; further comprising:
determining the cross-entropy loss for each of the training examples by, for each of the corresponding training output sequences in the training example, determining the product of the first cross-entropy term and the second cross-entropy term, and summing the determined products.

Clause 11. The method of clause 10, comprising:
processing each training input sequence using multiple instances of the generative neural network system operating in parallel to obtain multiple samples from the generative neural network system to provide the multiple corresponding training output sequences corresponding to the training input sequence.

Clause 12. The method of any of clauses 1-6, wherein the set of one or more corresponding training output sequences comprises multiple corresponding training output sequences corresponding to the training input sequence; and wherein obtaining the set of training examples comprises, for each of the training examples:

processing the training input sequence using the generative neural network system multiple times to obtain multiple samples from the generative neural network system, each sample providing a respective one of the corresponding training output sequences.

Clause 13. The method of clause 12, wherein processing the training input sequence using the generative neural network system multiple times to obtain multiple samples from the generative neural network system comprises processing the training input sequence using multiple instances of the generative neural network system operating in parallel to obtain multiple samples from the generative neural network system.

Clause 14. The method of any of clauses 12-13, wherein the objective function comprises a contrastive objective function, and further comprising:

for each training example, dividing the multiple corresponding training output sequences into two groups, a positive group and a negative group, based on their aggregated rewards, each group comprising one or more corresponding training output sequences; and wherein

training the sequence processing neural network of the generative neural network system using the contrastive objective function, wherein the contrastive objective function is determined using the one or more aggregated rewards in each of the two groups.

Clause 15. The method of clause 14, comprising:
determining the contrastive objective function from a ratio of a first contrastive term dependent on the one or more aggregated rewards in the positive group and a second contrastive term dependent on the one or more aggregated rewards in the negative group.

Clause 16. The method of clause 15 when dependent on clause 6, comprising:

determining the first contrastive term from a sum of the log score difference for the training output sequence and the aggregated reward for each training output sequence in the positive group; and
determining the second contrastive term from a sum of the log score difference for the training output sequence and a value complementary to the aggregated reward for each training output sequence in the negative group.

Clause 17. The method of clause 16, wherein the positive group comprises a plurality of training output sequences, and comprising:
determining the first contrastive term by summing, over each training output sequence in the positive group, an exponentiated version of the sum of the log score difference for the training output sequence and the aggregated reward for the training output sequence.

Clause 18. The method of clause 16 or 17, wherein the negative group comprises a plurality of training output sequences, and comprising:
determining the second contrastive term by summing, over each training output sequence in the negative group, an exponentiated version of the sum of the log score difference for the training output sequence and the value complementary to the aggregated reward for the training output sequence.

Clause 19. The method of any of clauses 1-18, wherein the plurality of different reward models comprises an instance of the sequence processing neural network of the generative neural network system with a separate neural network head for each of the different reward models; and wherein processing the training example using the plurality of different reward models comprises:
processing the training input sequence and one of the corresponding training output sequences using the instance of the sequence processing neural network to generate each of the respective plurality of reward values in parallel from a respective one of the neural network heads.

Clause 20. A computer-implemented method of generating an output sequence, comprising:
obtaining a generative neural network system, wherein the generative neural network system is configured to generate an output sequence by processing an input sequence using a sequence processing neural network, and wherein the generative neural network system has been trained by the method of any of clauses 1-19;

obtaining an input sequence; and

processing the input sequence using the trained generative neural network system to generate the output sequence.

Clause 21. A computer-implemented method of generating an output sequence, comprising:

obtaining a generative neural network system, wherein the generative neural network system is configured to generate an output sequence by processing an input sequence using a sequence processing neural network, and wherein the generative neural network system has been trained using a set of training examples each scored using each of a plurality of different reward models, wherein rewards from the reward models are combined to determine a Nash score for training the generative neural network system;

obtaining an input sequence; and

processing the input sequence using the trained generative neural network system to generate the output sequence.

Clause 22. The method of any of clauses 1-21,

wherein the input sequence and the output sequence, the training input sequence and the one or more corresponding training output sequences, each comprise a sequence of tokens,

wherein the tokens represent text, pixels of an image, or an audio waveform; and

wherein the generative neural network system is configured to generate the output sequence of tokens to perform a task represented by the input sequence of tokens.

Clause 23. The method of clause 22, wherein the task comprises:

i) an image or audio generation task, wherein the input sequence of tokens characterizes the image or audio to be generated and the output sequence of tokens comprises tokens defining an image or audio waveform characterized by the input sequence of tokens; or

ii) an image or audio processing task, wherein the input sequence of tokens defines an image or audio input and the output sequence of tokens comprises tokens defining text that describes the image or audio input; or

iii) a multimodal processing task, wherein the input sequence of tokens characterizes both an image or audio input and a text input and wherein the output sequence of tokens comprises tokens defining a result of an image or audio processing task defined by the text; or

iv) an agent control task, wherein the agent interacts with an environment to perform the task, wherein the input sequence of tokens comprises an observation of the environment, and wherein the output sequence of tokens comprises tokens defining one or more actions to be performed by the agent in the environment in response to the observation.

Clause 24. One or more non-transitory computer storage media storing instructions that when executed by one or more computers cause the one or more computers to perform operations of the respective method of any one of clauses 1-23.

Clause 25. A system comprising:

one or more computers; and

one or more storage devices communicatively coupled to the one or more computers, wherein the one or more storage devices store instructions that, when executed by the one or more computers, cause the one or more computers to perform operations of the respective method of any one of clauses 1-23.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of training a generative neural network system, the generative neural network system configured to generate an output sequence by processing an input sequence using a sequence processing neural network, the method comprising:
obtaining a set of training examples, each training example comprising a training input sequence and a set of one or more corresponding training output sequences, wherein the obtaining comprises processing each training input sequence using the generative neural network system to generate each of the one or more corresponding training output sequences; and, for each of the training examples:

   processing the training example using a plurality of different reward models to generate a respective plurality of reward values;
   combining the reward values from each of the reward models to obtain an aggregated reward; and
   training the sequence processing neural network of the generative neural network system using an objective function determined using the aggregated reward.

2. The method of claim 1, wherein combining the reward values from each of the reward models to obtain an aggregated reward comprises determining a product of the reward values, and optionally, wherein:

   (i) determining the product of the reward values comprises determining a weighted geometric mean of the reward values; and/or
   (ii) the aggregated reward comprises a Nash score or a weighted Nash score of the reward values.

3. The method of claim 1 or 2, wherein processing the training example using the plurality of different reward models comprises:
processing the training input sequence and each of the one or more corresponding training output sequences using each of the different reward models to generate the respective plurality of reward values.

4. The method of any of claims 1-3, further comprising, for each of the training examples:
for each of the corresponding training output sequences to the training input sequence of the training example:

   determining a log score difference representing a relative log likelihood of the corresponding training output sequence being generated by the generative neural network system and being generated by a reference generative neural network system, given the training input sequence; and wherein
   the objective function is determined using a combination of the log score difference and the aggregated reward for a training example.

5. The method of claim 4, wherein the objective function comprises a cross-entropy loss between a distribution of the log score differences and a target distribution defined by the aggregate reward, and

   preferably, comprising determining the cross-entropy loss for each of the training examples as a product of a first cross-entropy term dependent upon the aggregated reward and a second cross-entropy term that represents the log score difference, and
   more preferably, wherein the set of one or more corresponding training output sequences comprises multiple training output sequences corresponding to the training input sequence; and for each of the training examples:
   determining the cross-entropy loss as a sum, over each of the training output sequences in the training example, of a product of the first cross-entropy term and the second cross-entropy term for the respective training output sequence; and further comprising:

      determining each respective first cross-entropy term by converting the aggregated reward for the respective training output sequence in the training example into a respective logit; and
      determining each respective second cross-entropy term as a respective softmax of the log score difference over the log score differences for the training output sequence in the training example.

6. The method of claim 5, wherein each training example comprises the training input sequence and multiple corresponding training output sequences; further comprising:

   determining the cross-entropy loss for each of the training examples by, for each of the corresponding training output sequences in the training example, determining the product of the first cross-entropy term and the second cross-entropy term, and summing the determined products, and

optionally, processing each training input sequence using multiple instances of the generative neural network system operating in parallel to obtain multiple samples from the generative neural network system to provide the multiple corresponding training output sequences corresponding to the training input sequence.

7. The method of any of claims 1-6, wherein the set of one or more corresponding training output sequences comprises multiple corresponding training output sequences corresponding to the training input sequence; and wherein obtaining the set of training examples comprises, for each of the training examples:

processing the training input sequence using the generative neural network system multiple times to obtain multiple samples from the generative neural network system, each sample providing a respective one of the corresponding training output sequences, and
optionally, wherein:

(i) processing the training input sequence using the generative neural network system multiple times to obtain multiple samples from the generative neural network system comprises processing the training input sequence using multiple instances of the generative neural network system operating in parallel to obtain multiple samples from the generative neural network system; and/or
(ii) the objective function comprises a contrastive objective function, and further comprising:

for each training example, dividing the multiple corresponding training output sequences into two groups, a positive group and a negative group, based on their aggregated rewards, each group comprising one or more corresponding training output sequences; and wherein
training the sequence processing neural network of the generative neural network system using the contrastive objective function, wherein the contrastive objective function is determined using the one or more aggregated rewards in each of the two groups.

8. The method of claim 7, comprising:
determining the contrastive objective function from a ratio of a first contrastive term dependent on the one or more aggregated rewards in the positive group and a second contrastive term dependent on the one or more aggregated rewards in the negative group.

9. The method of claim 8 when dependent on claim 6, comprising:

determining the first contrastive term from a sum of the log score difference for the training output sequence and the aggregated reward for each training output sequence in the positive group; and
determining the second contrastive term from a sum of the log score difference for the training output sequence and a value complementary to the aggregated reward for each training output sequence in the negative group; and
optionally, wherein:

(i) the positive group comprises a plurality of training output sequences, and the method further comprises: determining the first contrastive term by summing, over each training output sequence in the positive group, an exponentiated version of the sum of the log score difference for the training output sequence and the aggregated reward for the training output sequence; and/or
(ii) the negative group comprises a plurality of training output sequences, and the method further comprises: determining the second contrastive term by summing, over each training output sequence in the negative group, an exponentiated version of the sum of the log score difference for the training output sequence and the value complementary to the aggregated reward for the training output sequence.

10. The method of any of claims 1-9, wherein the plurality of different reward models comprises an instance of the sequence processing neural network of the generative neural network system with a separate neural network head for each of the different reward models; and wherein processing the training example using the plurality of different reward models comprises:
processing the training input sequence and one of the corresponding training output sequences using the instance of the sequence processing neural network to generate each of the respective plurality of reward values in parallel from a respective one of the neural network heads.

**11.** A computer-implemented method of generating an output sequence, comprising:

obtaining a generative neural network system, wherein the generative neural network system is configured to generate an output sequence by processing an input sequence using a sequence processing neural network, and wherein the generative neural network system has been trained by the method of any of claims 1-10;
obtaining an input sequence; and
processing the input sequence using the trained generative neural network system to generate the output sequence.

**12.** A computer-implemented method of generating an output sequence, comprising:

obtaining a generative neural network system, wherein the generative neural network system is configured to generate an output sequence by processing an input sequence using a sequence processing neural network, and wherein the generative neural network system has been trained using a set of training examples each scored using each of a plurality of different reward models, wherein rewards from the reward models are combined to determine a Nash score for training the generative neural network system;
obtaining an input sequence; and
processing the input sequence using the trained generative neural network system to generate the output sequence.

**13.** The method of any of claims 1-12,

wherein the input sequence and the output sequence, the training input sequence and the one or more corresponding training output sequences, each comprise a sequence of tokens,
wherein the tokens represent text, pixels of an image, or an audio waveform; and
wherein the generative neural network system is configured to generate the output sequence of tokens to perform a task represented by the input sequence of tokens, and
optionally, wherein the task comprises:

i) an image or audio generation task, wherein the input sequence of tokens characterizes the image or audio to be generated and the output sequence of tokens comprises tokens defining an image or audio waveform **characterized by** the input sequence of tokens; or
ii) an image or audio processing task, wherein the input sequence of tokens defines an image or audio input and the output sequence of tokens comprises tokens defining text that describes the image or audio input; or
iii) a multimodal processing task, wherein the input sequence of tokens characterizes both an image or audio input and a text input and wherein the output sequence of tokens comprises tokens defining a result of an image or audio processing task defined by the text; or
iv) an agent control task, wherein the agent interacts with an environment to perform the task, wherein the input sequence of tokens comprises an observation of the environment, and wherein the output sequence of tokens comprises tokens defining one or more actions to be performed by the agent in the environment in response to the observation.

**14.** One or more non-transitory computer storage media storing instructions that when executed by one or more computers cause the one or more computers to perform operations of the respective method of any one of claims 1-13.

**15.** A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-13.

Figure 1

Figure 2

300

| OBTAIN A SET OF TRAINING INPUT SEQUENCES | 302 |

↓

| GENERATE A SET OF TRAINING EXAMPLES BY PROCESSING EACH TRAINING INPUT SEQUENCE USING THE GENERATIVE NEURAL NETWORK SYSTEM TO GENERATE ONE OR MORE CORRESPONDING TRAINING OUTPUT SEQUENCES | 304 |

FOR EACH
TRAINING EXAMPLE

↓

| PROCESS THE TRAINING EXAMPLE USING A PLURALITY OF DIFFERENT REWARD MODELS TO GENERATE A RESPECTIVE PLURALITY OF REWARD VALUES | 306 |

↓

| COMBINE THE REWARD VALUES FROM EACH OF THE REWARD MODELS TO OBTAIN AN AGGREGATED REWARD | 308 |

↓

| TRAIN A SEQUENCE PROCESSING NEURAL NETWORK OF THE GENERATIVE NEURAL NETWORK SYSTEM USING AN OBJECTIVE FUNCTION DEPENDENT ON THE AGGREGATED REWARD | 310 |

Figure 3

400

DIVIDE THE MULTIPLE CORRESPONDING TRAINING OUTPUT SEQUENCES INTO TWO GROUPS, A POSITIVE GROUP AND A NEGATIVE GROUP, BASED ON THEIR AGGREGATED REWARDS — 402

DETERMINE A FIRST CONTRASTIVE TERM FROM A SUM OF THE LOG SCORE DIFFERENCE FOR THE TRAINING OUTPUT SEQUENCE AND THE AGGREGATED REWARD FOR EACH TRAINING OUTPUT SEQUENCE IN THE POSITIVE GROUP — 404

DETERMINE A SECOND CONTRASTIVE TERM FROM A SUM OF THE LOG SCORE DIFFERENCE FOR THE TRAINING OUTPUT SEQUENCE AND A VALUE COMPLEMENTARY TO THE AGGREGATED REWARD FOR EACH TRAINING OUTPUT SEQUENCE IN THE NEGATIVE GROUP — 406

DETERMINE A CONTRASTIVE OBJECTIVE FUNCTION FROM A RATIO OF A FIRST CONTRASTIVE TERM AND THE SECOND CONTRASTIVE TERM — 408

TRAIN THE SEQUENCE PROCESSING NEURAL NETWORK OF THE GENERATIVE NEURAL NETWORK SYSTEM USING THE CONTRASTIVE OBJECTIVE FUNCTION — 410

Figure 4

500

| DETERMINE A FIRST LOG SCORE REPRESENTING A LOG LIKELIHOOD OF THE TRAINING OUTPUT SEQUENCE BEING GENERATED BY THE GENERATIVE NEURAL NETWORK SYSTEM GIVEN THE TRAINING INPUT SEQUENCE |
| 502 |

| DETERMINE A FIRST LOG SCORE REPRESENTING A LOG LIKELIHOOD OF THE TRAINING OUTPUT SEQUENCE BEING GENERATED BY A REFERENCE GENERATIVE NEURAL NETWORK SYSTEM GIVEN THE TRAINING INPUT SEQUENCE |
| 504 |

| DETERMINE A LOG SCORE DIFFERENCE FROM THE FIRST LOG SCORE AND THE SECOND LOG SCORE |
| 506 |

| TRAIN THE SEQUENCE PROCESSING NEURAL NETWORK OF THE GENERATIVE NEURAL NETWORK SYSTEM USING AN OBJECTIVE FUNCTION DEPENDENT ON A COMBINATION OF THE LOG SCORE DIFFERENCE AND THE AGGREGATED REWARD FOR A TRAINING EXAMPLE |
| 508 |

Figure 5

600

| Method | LC-WR | WR |
|---|---|---|
| DPO (K=2) | 16.59 | 13.76 |
| DPO (x K - 1) | 14.86 | 11.70 |
| InfoNCA | 24.72 | 24.97 |
| MOMA (Weighted Avg) | 31.53 | 31.80 |
| MOMA (Nash) | **31.78** | **33.66** |

Figure 6

Europäisches
Patentamt

European
Patent Office

Office européen
des brevets

# EUROPEAN SEARCH REPORT

**Application Number**

EP 26 15 6001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Williams Marcus: "Multi-objective Reinforcement learning from AI Feedback", arXiv.org, 12 June 2024 (2024-06-12), pages 1-14, XP093390550, Retrieved from the Internet: URL:https://arxiv.org/abs/2406.07295 [retrieved on 2026-04-22] * Abstract, 2. Multi-Objective reinforcement learning and scalarization functions, 3. Methodology * ----- | 1-15 | INV. G06N3/045 G06N3/0475 G06N3/084 G06N3/092 |
| A | WANG HAOXIANG ET AL: "Arithmetic Control of LLMs for Diverse User Preferences: Directional Preference Alignment with Multi-Objective Rewards", PROCEEDINGS OF THE 62ND ANNUAL MEETING OF THE ASSOCIATION FOR COMPUTATIONAL LINGUISTICS (VOLUME 1: LONG PAPERS), 6 March 2024 (2024-03-06), pages 1-18, XP093390593, DOI: 10.18653/v1/2024.acl-long.468 * Abstract, 1. Introduction, 2. Directional preference alignement * ----- | 1-15 | |
| A | WANG HAOXIANG ET AL: "Interpretable Preferences via Multi-Objective Reward Modeling and Mixture-of-Experts", FINDINGS OF THE ASSOCIATION FOR COMPUTATIONAL LINGUISTICS: EMNLP 2024, 18 June 2024 (2024-06-18), pages 1-14, XP093390595, DOI: 10.18653/v1/2024.findings-emnlp.620 * Abstract, 1. Introduction, 3. Methodology, 4. Experiments * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| The Hague | 20 May 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                 

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 26 15 6001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Yang Rui ET AL: "Rewards-in-Context: Multi-objective Alignment of Foundation Models with Dynamic Preference Adjustment", arXiv.org, 16 October 2024 (2024-10-16), pages 1-22, XP093390598, Retrieved from the Internet: URL:https://arxiv.org/abs/2402.10207 [retrieved on 2026-04-23] * Abstract, 1. Introduction, 3. RiC algorithm, 4. Experiments * | 1-15 | |

-----

TECHNICAL FIELDS
SEARCHED      (IPC)

The present search report has been drawn up for all claims

| Place of search | Date of completion of the search | Examiner |
|---|---|---|
| The Hague | 20 May 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KINGMA et al.** *arXiv:1412.6980*
- **CHEN et al.** Web Language Image. *arXiv:2305.18565v1*
- **KRISHNA et al.** the Visual Genome dataset for Visual Question Answering. *arXiv:1602.07332*
- **SHAO et al.** Objects365: A large-scale, high-quality dataset for object detection. *IEEE/CVF international conference on computer vision*, 8430-8439
- **KUZNETSOVA et al.** *arXiv:1811.00982*
- **ORDONEZ et al.** Im2Text: Describing Images Using 1 Million Captioned Photographs. *NeurIPS*, 2011
- **SHARMA et al.** Conceptual Captions: A Cleaned, Hypernymed, Image Alt-text Dataset For Automatic Image Captioning. *ACL*, 2018
- **KAY et al.** *arXiv:1705.06950*
- Audio set: An ontology and human-labeled dataset for audio events. **GEMMEKE et al.** ICASSP. IEEE, 2017, 776-780
- **EBERT et al.** *arXiv:2109.13396*
- **JIA et al.** *arXiv:2102.05918*
- **BROHAN et al.** *arXiv:2212.06817*
- **DRIESS et al.** *arXiv:2303.03378*
- **BROHAN et al.** *arXiv:2307.15818*